# EUROPÄISCHE PATENTANMELDUNG

(11) **EP 0 614 944 A2**
(43) Veröffentlichungstag der Anmeldung: **14.09.1994**
(21) Anmeldenummer: 94103436.5
(22) Anmeldetag: 07.03.1994
(51) Int. Cl.: C08L 61/20, C08K 13/02, C09D 5/18

(54) **Intumeszierende Zusammensetzung vom Zwei-Komponenten-Typ**

(30) Priorität: 09.03.1993 DE 4307406
(71) Anmelder: AKRO-FIREGUARD PRODUCTS, INC., Lenexa, Kansas 66215 (US); Chemische Fabrik Budenheim Rudolf A. Oetker, D-55257 Budenheim (DE)
(72) Erfinder: Göbelbecker, Sieghard, Dr., D-55294 Bodenheim (DE); Nägerl, Hans-Dieter, Dr., D-67373 Dudenhofen (DE); Danker, George J., Olathe, KS 66061 (US); Kirk, Donald, Kansas City, MO 64112 (US)
(74) Vertreter: Weinhold, Peter, Dr.

(57) **Zusammenfassung**

Beschrieben wird eine intumeszierende Zusammensetzung vom Zwei-Komponenten-Typ, die mindestens umfaßt
(A) ein Amino-Formaldehydharz und
(B) einen Phosphorsäureester in Mischung mit mindestens einem Additiv, das ausgewählt ist aus zur Wasseraufnahme befähigten Substanzen, Füllstoffen, Pigmenten, Tensiden und Mischungen davon.
Diese Zusammensetzung eignet sich zur Verwendung als Brandschutzmittel, insbesondere zur Beschichtung bzw. Imprägnierung von Glasfasermatten.

## Beschreibung

Die vorliegende Erfindung betrifft feuerhemmende Materialien, insbesondere intumeszierende Zusammensetzungen vom 2-Komponenten-Typ und deren Verwendung bei der Herstellung von feuerhemmenden Beschichtungen.

Intumeszierende Zusammensetzungen sind allgemein bekannt; sie bilden bei Hitze- und Feuereinwirkung und bei Aufblähung ein dickes, relativ schwer entflammbares, isolierend wirkendes Kohlenstoffgerüst. Die wesentlichen aktiven Bestandteile derartiger Zusammensetzungen sind eine Kohlenstoffquelle, aus der letztlich das isolierend wirkende Kohlenstoffgerüst gebildet wird, ein Treibmittel, das die Dicke oder das Anschwellen der gebildeten Verbrennungsprodukte beeinflußt, und ein saurer Katalysator, wie z.B. eine saure Phosphorsäureverbindung, die die intumeszierende Reaktion unter Hitzeeinwirkung auslöst. In der Vergangenheit wurden intumeszierende Zusammensetzungen für Oberflächenfarben oder andere Beschichtungen auf Substraten eingesetzt, um die Entflammbarkeit der Substrate zu verringern und die Substrate gegen Schäden zu schützen, die durch größere Hitze und Flammen entstehen können.

Herkömmliche intumeszierende Farben und Beschichtungen bestehen im allgemeinen aus Dispersionen mit einer Kohlenstoffquelle, einem Treibmittel und einem sauren Katalysator in Verbindung mit Bindemitteln, Verdickern, Lösungsmitteln, Pigmenten und dgl. Es hat sich jedoch gezeigt, daß derartige Beschichtungen nur bedingt geeignet sind, das darunterliegende Substrat vor Brandschäden zu schützen, da die dispergierten aktiven intumeszierenden Bestandteile auf der molekularen Ebene in der Zusammensetzung relativ weit voneinander entfernt sind. Deshalb wird einige Zeit zum Transport und zur internen Durchmischung dieser wichtigen Bestandteile benötigt, was die intumeszierende Reaktion verzögert und den sofortigen Schutz des Substrates verhindert.

In jüngster Zeit sind integrierte polymere Zusammensetzungen, in denen alle Bestandteile, die für eine Intumeszenz benötigt werden, in einer Polymerkette vorhanden sind, entwickelt worden. Diese Zusammensetzungen haben sich als wirksamer erwiesen als die oben beschriebenen intumeszierenden Beschichtungen, wahrscheinlich deshalb, weil die für eine Intumeszenz notwendigen Bestandteile in einer Polymerkette nahe beieinander gehalten werden und deshalb nur eine kurze oder überhaupt keine Transportzeit benötigt wird, um den Vorgang der Intumeszenz auszulösen.

Da diese polymeren Formulierungen eine zusätzliche Schutzwirkung ermöglichen, besteht ein Bedürfnis, diese weiter zu verbessern und Herstellungsverfahren für eine wirksame Verwendung in einer Vielfalt von industriellen und kommerziellen Anwendungen zu finden und deren leichte Anwendung vor Ort zu ermöglichen.

Besonders interessant sind intumeszierende Beschichtungen, die als Schutzbeschichtungen für Bauteile, die Wohneinheiten trennen, um das Ausbreiten von Feuer von einer zur anderen Wohneinheit zu verhindern, vorgeschlagen und benutzt worden sind. Viele Feuerschutzwände oder -barrieren, die früher beim Bau verwendet wurden, waren entweder nicht mit einer intumeszierenden Schutzschicht versehen, da diese Beschichtungen zu deren Bauzeit noch nicht bekannt waren, oder sind mit dispersionsartigen Beschichtungen niedriger Qualität versehen, die mit der Zeit und insbesondere durch Bewitterung ihre Wirkung verloren haben. Wegen des begrenzten Raumes, in denen solche Barrieren im allgemeinen untergebracht sind, ist es oft schwierig und teuer, solche Bauteile durch neue beschichtete Barrieren zu ersetzen.

Es besteht deshalb ein Bedarf an wirksamen intumeszierenden Beschichtungszusammensetzungen, die vor Ort und in einer relativ kurzen Zeit leicht auf fest fixierte Barrieren aufgetragen werden können. Außerdem soll die resultierende Beschichtung vorzugsweise keine schädlichen Dämpfe abgeben und die Verwendung von gefährlichen Lösungsmitteln während der Auftragung soll vermieden werden, da die Barrieren, die beschichtet werden müssen, häufig in relativ engen und nicht belüfteten Räumen untergebracht sind. Eine weitere bevorzugte Eigenschaft einer solchen Beschichtung sollte die Abwesenheit von schädlichen toxischen Rauchgasen sein, die während des Vorgangs der Intumeszenz entstehen können, da solche Rauchgase für Personen in der Umgebung des Brandes gefährlich sind.

Ziel der vorliegenden Erfindung ist deshalb die Bereitstellung eines intumeszierenden Zusammensetzung, die integriert intumeszierend wirkt, da sie alle für eine Intumeszenz erforderlichen Komponenten in engem molekularen Kontakt vorliegend aufweist.

Ein weiteres Ziel der vorliegenden Erfindung ist die Bereitstellung einer intumeszierenden Zusammensetzung, die als Beschichtungszusammensetzung einsetzbar ist, die die Entflammbarkeit des damit beschichteten Substrats verhindert.

Ein weiteres Ziel der vorliegenden Erfindung ist die Bereitstellung einer intumeszierenden Zusammensetzung in Form einer wäßrigen Formulierung,um deren Anwendung zu erleichtern und um Feuer-und Gesundheitsrisiken während des Aufbringens zu vermindern.

Ein noch weiteres Ziel der vorliegenden Erfindung ist die Bereitstellung einer intumeszierenden Zusammensetzung, die während des Vorgangs der Intumeszenz keine schädlichen oder brennbaren Gase entwickelt.

Ein weiteres Ziel der vorliegenden Erfindung ist die Bereitstellung einer intumeszierenden Zusammensetzung, die hinsichtlich Viskosität und anderer Eigenschaften wenigstens annähernd den herkömmlichen Beschichtungszusammensetzungen entspricht, damit sie schnell mit wenig oder keinen Spezialkenntnissen unter Verwendung herkömmlicher Vorrichtungen aufgetragen werden kann.

Ein weiteres Ziel der vorliegenden Erfindung ist die Bereitstellung einer intumeszierenden Zusammensetzung, die über längere Zeit gegenüber physikalischem, chemischem und von Umwelt beeinflußten Abbau beständig ist.

Ein weiteres Ziel der vorliegenden Erfindung ist die Bereitstellung einer intumeszierenden Zusammensetzung, die relativ schnell und insbesondere bei relativ niedrigen Temperaturen, die vor Ort bzw. in der Praxis vorliegen können, aushärtet.

Ein weiteres Ziel der vorliegenden Erfindung ist die Bereitstellung einer intumeszierenden Zusammensetzung, die in Form von zwei Komponenten mit relativ langer Lagerfähigkeit vor den Mischen bzw. der Anwendung vorliegt, wobei diese Komponenten vor Ort zusammengegeben werden können und aus der Mischung dann als Reaktionsprodukt die eigentliche intumeszierende Substanz entsteht.

Erfindungsgemäß werden die obigen Aufgaben gelöst durch eine intumeszierende Zusammensetzung von Zwei-Komponenten-Typ, die dadurch gekennzeichnet ist, daß sie mindestens umfaßt:
(A) ein Amino-Formaldehydharz; und
(B) einen Phosphorsäureester in Mischung mit mindestens einem Additiv, das ausgewählt aus zur Wasseraufnahme befähigten Substanzen, Füllstoffen, Pigmenten, Tensiden und Mischungen davon.

Vorzugsweise werden die beiden Komponenten (A) und (B) getrennt verpackt. In diesem Fall sind beide Komponenten relativ lange lagerstabil und können an der Verarbeitungsstelle unter Herstellung der eigentlichen intumeszierenden Beschichtungszusammensetzung gemischt werden. Erfindungsgemäß wurde gefunden, daß das getrennte Bereitstellen der Komponenten (A) und (B) und das Mischen des Phosphorsäureesters mit einen der obigen Additive, insbesondere mit einer zur Wasseraufnahme befähigten Substanz, die Lagerzeit der obigen Komponenten stark verlängert, wodurch die kommerzielle Akzeptanz der intumeszierenden Zusammensetzung stark erhöht wird.

Nach dem Mischen der beiden Komponenten (A) und (B) reagieren das Amino-Formaldehydharz und der Phosphorsäureester durch eine Kondensationsreaktion (Wasserabspaltung) unter Ausbildung eines Polymeren, das alle Komponenten, die für eine Intumeszenz erforderlich sind, innerhalb seiner Kettenstruktur enthält. Nach ihrer Verwendung zur Oberflächenbeschichtung oder dergleichen härtet die Zusammensetzung aus und bildet eine relativ gleichmäßige, quervernetzte, flexible und undurchlässige intumeszierende Schicht. Die zur Wasseraufnahme befähigte Substanz, vorzugsweise pyrogene Kieselsäure, vergrößert oder verstärkt die Wasserentfernung bzw. Wasserverdampfung aus der Zusammensetzung. Dadurch wird verhindert, daß Feuchtigkeit unter der (ausgehärteten) Oberflächenschicht eingeschlossen wird, was in der Gesamtbeschichtung zu Schwachstellen und Hohlräumen führen würde. Da Wasser das Haupt-Nebenreaktionsprodukt ist, werden bei der Aushärtung der Zusammensetzung keine toxischen oder brennbaren Gase entwickelt, was die erfindungsgemäße Zusammensetzung besonders geeignet für die Anwendung in geschlossenen Systemen (Räumen), wie z.B. Flugzeugen und Unterseebooten, macht.

Die vorliegende intumeszierende Zusammensetzung stellt eine Verbesserung der intumszierenden Zusammensetzung dar, die in der PCT-Anmeldung WO/93/05118 beschrieben ist. Diese PCT-Anmeldung beschreibt eine Zusammensetzung mit integrierten intumeszierenden Eigenschaften, die erhältlich ist durch Vereinigen von
(a) einem oder mehreren Amino-Formaldehydharzen; und
(b) einer Mischung von gegebenenfalls mit Carbonsäureanhydrid modifizierten Mono- und Diestern von Orthophosphorsäure mit einem oder mehreren Polyolen, wobei der durchschnittliche Hydroxylgruppengehalt dieser Polyole mindestens 40 Gew.-% beträgt, das Molverhältnis Monoester/Diester 12:1 nicht übersteigt und der Phosphorgehalt der Mischung wenigstens 10 Gew.-% beträgt.

Alle in dieser PCT-Anmeldung beschriebenen Komponenten der intumeszierenden Zusammensetzung können auch erfindungsgemäß eingesetzt werden. Insbesondere wird es erfindungsgemäß bevorzugt, als Phosphorsäureester der Komponente (B) die in der obigen PCT-Anmeldung beschriebenen Mischungen von Mono- oder Diestern von Orthophosphorsäure mit einem oder mehreren Polyolen einzusetzen. Eine derartige Mischung ist z.B. unter der Handelsbezeichnung BUDIT ® 380 (Produkt-Nr. Fb 05-80) von der Chemischen Fabrik Budenheim erhältlich.

Als zur Wasseraufnahme befähigte Substanzen in der Komponente (B) können beliebige bekannte Verbindungen eingesetzt werden, bevorzugt wird jedoch die Verwendung von feinteiligen Materialien, wie z.B. pyrogenen Kieselsäuren. Es wurde festgestellt, daß die Verwendung einer pyrogenen Kieselsäure auch den Vorteil hat, daß diese als thixotrope Verbindung die Viskosität der Zusammensetzung erhöht. Somit kann erreicht werden, daß die Viskosität der Komponente (B) (und damit auch der genannten Zusammensetzung) in Bereich der Viskositäten gängiger Beschichtungsformulierungen liegt, so daß das Material mit Standardmethoden und -geräten verarbeitet werden kann. Außerdem hat die pyrogene Kieselsäure positive Auswirkungen auf die mechanische Stabilität und Flexibilität der Beschichtung. Ein besonders bevorzugter handelsüblicher Typ von pyrogener Kieselsäure ist unter der Handelsbezeichnung AEROSIL ® 200 von der Firma Degussa erhältlich.

Die Komponente (B) der erfindungsgemäßen Zusammensetzung kann weiterhin Tenside, Füllstoffe und Pigmente anstelle von oder (vorzugsweise) zusätzlich zu der zur Wasseraufnahme befähigten Substanz enthalten. Bei diesen Stoffen handelt es sich um herkömmliche Materialien, die üblicherweise in intumeszierenden Zusammensetzungen Verwendung finden. So können als Pigmente z.B. Titandioxid, Ruß und Silikatpigmente eingesetzt werden. Füllstoffe wie Mineral- oder Cellulosefasern sind zur Erhöhung der mechanischen Stabilität der ausgehärteten Beschichtung besonders geeignet. Der Einsatz von Tensiden und der einzusetzende Tensidtyp hängt dabei u.a. vom zu beschichtenden Substrat ab. Es können anionische, kationische und nicht-ionische Tenside, wie sie dem Fachmann auf diesem Gebiet bekannt sind, eingesetzt werden. Als für die Beschichtung von Glasfasermatten besonders geeignet hat sich z.B. der Einsatz einer weißen Farbpaste erwiesen, die 65% Titandioxid und 35% Tensid enthält. Das Produkt ist unter der Bezeichnung COLORTREND ® Titanweiß z.B. von Hüls America, Inc., Piscataway NJ, USA, erhältlich. Dieses Produkt verhindert auch die Krater- und Blasenbildung in der Beschichtung. Durch die resultierende weiße Färbung der Beschichtung ist außerdem für den Anwender leichter zu erkennen, welche Bereiche des Substrats bereits beschichtet wurden. Dadurch trägt die Farbgebung zumindest indirekt zum Erreichen einer gleichmäßigen Schichtdicke über die gesamte zu beschichtende Fläche bei.

Die Phosphorsäureesterkomponente (B) wird vorzugsweise als wäßrige Lösung bzw. Dispersion formuliert, wobei über den Wassergehalt die für den jeweiligen Anwendungsfall gewünschte Viskosität eingestellt werden kann. Allgemein enthält die Komponente (B) den Phosphorsäureester in einer Menge von 30 bis 70 Gew.-%, bevorzugt etwa 50 Gew.-%; eine zur Wasseraufnahme befähigte Substanz in einer Menge von 0,5 bis 10 Gew.-%, insbesondere 0,75 bis 3 Gew.-%; und Wasser in einer Menge von 0 bis 45 Gew.-%, insbesondere 15 bis 25 Gew.-%. Die obigen Prozentsätze sind auf das Gewicht der nicht ausgehärteten Beschichtungszusammensetzung bezogen. Die eventuelle Restmenge auf 100% setzt sich aus den anderen Additiven zusammen. Es ist darauf hinzuweisen, daß die eingesetzte Wassermenge die Aushärtungszeit dahingehend beeinflußt, daß ein höherer Wasseranteil die Aushärtungszeit verlängert. Deshalb muß die einzusetzende Wassermenge hinsichtlich der für die Verarbeitung gewünschten Viskosität derart optimiert werden, daß durch Sprühen, Streichen oder eine andere gängige Beschichtungsmethode eine dünne Beschichtung erzielt werden kann.

Die Amino-Formaldehydharz-Komponente (A) der erfindungsgemäßen Zusammensetzung wird vorzugsweise in einer Menge von 70 bis 30 Gew.-%, besonders bevorzugt 40 bis 20 Gew.-%, bezogen auf die nicht ausgehärtete Beschichtungszusammensetzung, eingesetzt. Die für die erfindungsgemäße Zusammensetzung brauchbaren Amino-Formaldehydharze müssen mit dem Phosphorsäureester der Komponente (B) durch eine Kondensationsreaktion zu einen vernetzten, intumeszierenden Polymer reagieren können. Bevorzugte Amino-Formaldehydharze für diese Reaktion sind Melamin-Formaldehydharze, Harnstoff-Formaldehydharze und Mischungen davon.

Wie in der obigen PCT-Anmeldung beschrieben, können diese Amino-Formaldehydharze z.B. durch Methylierung oder durch Umsetzung mit aromatischen Glycidylethern und/oder cycloaliphatischen Epoxiden modifiziert werden, um die Stabilität der resultierenden Beschichtung zu verbessern. Derartige Zusätze erhöhen bei Beflammung auch die Haftung der intumeszierenden Schicht auf dem zu schützenden Substrat. Für die erfindungsgemäßen Zwecke besonders geeignet sind Dimethylolmelaminharze und Trimethylolmelaminharze und ganz besonders bevorzugt Hexamethoxymethylmelaminharze. Die in der Praxis eingesetzten technischen Produkte enthalten in der Regel Mischungen methylolierter Melamine. Diese Mischungen sind ebenfalls geeignet. Die kommerziell erhältlichen Produkte sind entweder als sprühgetrocknete Pulver, als wäßrige Lösungen oder als flüssige Formulierungen mit einem Feststoffgehalt von annähernd 100% verfügbar.

Da der Wassergehalt die Lagerfähigkeit eines Amino-Formaldehydharzes (Melaminharzes) und damit diejenige des Zwei-Komponenten-Systems beeinträchtigt, werden flüssige Amino-Formaldehydharze als Komponente (A) bevorzugt.

Die wesentlichen Bestandteile des intumeszierenden Polymers, das aus der erfindungsgemäßen Zusammensetzung hervorgeht, sind die Phosphorsäureesterkomponente und das Amino-Formaldehydharz. Diese Komponenten werden bevorzugt in einem Gewichtsverhältnis von Amino-Formaldehydharz zu Phosphorsäureester von 30:70 bis 70:30, insbesondere 40:60 bis 50:50 eingesetzt.

Die bevorzugte Verwendung der erfindungsgemäßen Zusammensetzung ist diejenige zur Beschichtung von Glasfasermatten bzw. -platten, insbesondere eines unter der Bezeichnung CONOLITE ® (Pioneer Plastics, Tennessee, USA) erhältlichen Produktes, das üblicherweise zur Auskleidung der Laderäume von Flugzeugen und dgl. eingesetzt wird. Eine für diesen besonderen Anwendungsfall bevorzugte Amino-Formaldehydharz-Komponente ist ein flüssiges, wasserlösliches Melamin-Formaldehydharz, das unter der Handelsbezeichnung CYMEL ® 303 (American Cyanamid) erhältlich ist. Dieses Produkt enthält vermutlich einen großen Anteil Hexamethoxymethylmelamin der allgemeinen Formel 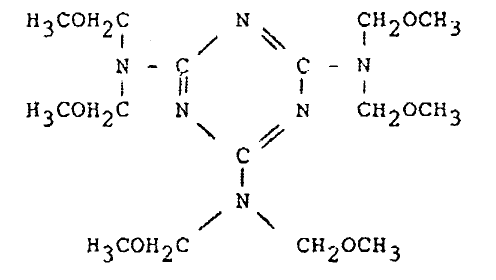
Ein wichtiger Gesichtspunkt hinsichtlich der vorliegenden Erfindung ist die Reihenfolge des Mischens der einzelnen Bestandteile der vorliegenden intumeszierenden Zusammensetzung. Besonders ist darauf zu achten, daß der Phosphorsäureester zuerst mit der zur Wasseraufnahme befähigten Substanz und/oder den übrigen Additiven (Füllstoffen, Pigmenten und Tensiden) zur Fertigstellung der Komponenten (B) zusammengegeben wird. Diese Komponente (B) wird vorzugsweise getrennt von der Amino-Formaldehydharz-Komponente (A) gelagert. Die Komponenten (A) und (B) werden vorzugsweise erst unmittelbar vor Herstellung der Beschichtung zusammengegeben und zur Reaktion gebracht. Durch die getrennte Aufbewahrung werden unerwünschte vorzeitige Polymerisation, Vernetzung oder ähnliches vermieden. Diese vorzeitige Polymerisation kann beispielsweise dann auftreten, wenn die Tenside, die Thixotropiermittel oder andere wasserhaltige Verbindungen mit den Amino-Formaldehydharz in Kontakt gebracht werden. Dadurch wird die Lagerfähigkeit dieser Komponente entscheidend verringert. Indem erfindungsgemäß wie oben beschrieben verfahren wird, kann eine Lagerfähigkeit des erfindungsgemäßen Zwei-Komponenten-Systems von einen halben bis zu einem ganzen Jahr erreicht werden. Bei Gebrauch wird die Amino-Formaldehydharz-Komponente (A) vorzugsweise zu der in einem sauberen Gefäß, bevorzugt aus Glas oder Kunststoff, vorgelegten Phosphorsäureester-Komponente (B) gegeben.

Nach den Vermischen reagieren der Phosphorsäureester und das Amino-Formaldehydharz unter Kondensation zu einen intumeszierenden Polymer.

Die erfindungsgemäße Zusammensetzung kann nach dem Mischen der beiden Komponenten (A) und (B) selbstverständlich nicht nur auf Glasfasermatten, sondern auf alle Substrate aufgetragen werden, die eines Brandschutzes bedürfen. Beispiele für derartige Substrate sind Holz, Kunststoffe, Glasfasern, Gummi, Metall und Textilien. Die Zusammensetzung kann durch herkömmliche Verfahren, wie z.B. Sprühen, Tauchen, Rakeln oder Streichen aufgetragen werden. Zur Erzielung höherer Schichtdicken kann die Auftragung auch mehrmals wiederholt werden. Die erhaltene Schichtdicke wird im Einzelfall von der Viskosität der Zusammensetzung und dem zu beschichtenden Substrat abhängen. Übliche Schichtdicken liegen im Bereich von 10 µm bis 3 mm.

Die erfindungsgemäße Zusammensetzung ist selbsthärtend, wobei die Härtung bevorzugt bei Raumtemperatur durchgeführt wird. Ein für die Härtung allgemein brauchbarer Temperaturbereich ist von 0 bis 65°C. Eine ausreichend schnelle Aushärtung, bei der die Beschichtung nach ca. 2 Stunden oberflächlich trocken ist, findet bei einer Temperatur von über etwa 10°C statt.

Es sind Beschichtungen mit unterschiedlichen Formulierungen möglich. Eine bevorzugte Formulierung für die Beschichtung von CONOLIE ®-Glasfaserplatten beschreibt das unten angegebene Beispiel 2.

### BEISPIEL 1

Dieses Beispiel veranschaulicht eine einfache Herstellung einer Mischung von Phosphorsäureteilestern.

In einen 1 Liter-Rundkolben, der mit einen Ankerrührer, einer Vakuumleitung (erreichbarer reduzierter Druck 160 mm Hg oder darunter), einem Heizmantel mit Temperaturkontrolle, einem Tropftrichter und einem Pulvertrichter versehen ist, werden über dem Pulvertrichter 184 g Glycerin eingefüllt. Die Heizung wird auf 140°C eingestellt. Zu dem heißen, langsam gerührten Glycerin werden 272 g Pentaerythrit gegeben. Bei ca. 145°C und unter Vakuum wird den Polyolgemisch ca. 0,5 Stunden darin enthaltenes Wasser entzogen. Nach Abkühlen auf 115°C und Einstellen der Solltemperatur auf diesen Wert werden bei hoher Rührgeschwindigkeit (ca. 1000 UpM) 338 g handelsübliche Tetraphosphorsäure zugegeben und zwar mit solcher Geschwindigkeit, daß die Temperatur in Reaktor 115°C nicht übersteigt. Nach Zugabe der gesamten Tetraphosphorsäure wird die Reaktionsmischung weitere 4 Stunden bei 115°C und unter Vakuum gehalten. Der Reaktionsverlauf wird durch Bestimmung der Säurezahl verfolgt, die am Ende der Reaktion auf einen konstanten Wert von etwa 440 mg KOH/g abgefallen ist.

Das oben erhaltene Produkt kann durch Wasserzugabe zu einer wäßrigen Lösung formuliert werden.

### BEISPIEL 2

### Verwendung einer erfindungsgemäßen Zusammensetzung zur Beschichtung von Glasfaserplatten usw.

Die Phosphorsäureester-Komponente (B) wurde wie folgt herstellt:
47,4 Gew.-Teile BUDIT ® 380 wurden mit 18,9 Gew.-Teilen Wasser unter langsamen Rühren gemischt. Dann wurden 1,3 Gew.-Teile AEROSIL ® 200 (pyrogene Kieselsäure) unter langsamem Rühren in kleinen Portionen eingetragen. Nach Vorliegen einer homogenen Mischung wurden 2,0 Gew.-Teile COLORTREND ®-Paste zugegeben und es wurde bis zu Homogenität weitergerührt. Die Komponente (B) wurde anschließend für den späteren Gebrauch in ein verschließbares Gefäß gefüllt. Die Reihenfolge der Zugabe der einzelnen Komponenten hat keine feststellbare Auswirkung auf das intumeszierende Polymer, das daraus hergestellt wird. So kann die pyrogene Kieselsäure auch vor dem Wasser zugegeben werden. Auch andere Reihenfolgen sind denkbar.

Die Amino-Formaldehyd-Komponente (A) bestand ausschließlich aus CYMEL ® 303, d.h. einer flüssigen Melamin-Formaldehydharz-Type, die für die Anwendung entweder umgepackt oder in Originalgebinden gelagert eingesetzt werden kann. Die Lagerhaltung für den späteren Gebrauch beider Komponenten kann in Großgebinden erfolgen.

Die Verpackung kann aber auch dergestalt erfolgen, daß beide Komponenten in den jeweils passenden Mengen als Zwei-Komponenten-System bereitgestellt werden. Die Mischung des Inhalts beider Behälter führt dann automatisch zum richtigen Mischungsverhältnis. Hierbei ist festzustellen, daß die getrennt aufbewahrten Komponenten (A) und (B) eine gute Lagerfähigkeit zwischen 6 Monaten und einen Jahr besitzen. Die Komponente (B) wurde der Verpackung entnommen und homogenisiert. Danach wurde Komponente (A) in einer Menge von 30,4 Gew.-Teilen, bezogen auf das Gesamtgewicht der Mischung, zugegeben. Unter Rühren mit mittlerer Scherkraft wurden die Komponenten anschließend gemischt. Vor der Verwendung ließ man die Zusammensetzung 5 bis 10 Minuten stehen.

Die derart hergestellte Zusammensetzung wurde auf verschiedene Substrate aufgebracht. Eine erste Beschichtung wurde auf eine Aluminiumfolie aufgebracht, wie sie üblicherweise unter anderem als Haushaltsfolie Verwendung findet.

Eine weitere Beschichtung wurde auf Polyethylenfolie, wie sie ebenfalls im Handel gebräuchlich ist, aufgebracht. Schließlich wurden auch ein Glasfasergewebe sowie mit Sandpapier angeschliffene bzw. unbehandelte CONOLITE ®-Glasfaserplatten mit dieser Zusammensetzung beschichtet.

Bei der Aluminiumfolie wurde nach sehr kurzer Abbindezeit von 10 bis 15 Minuten eine sehr gut auf dem Substrat haftende Beschichtung erhalten.

Die auf ein Glasfasergewebe mit einem Pinsel bis zur Sättigung des Substrats aufgebrachte Zusammensetzung machte während des Aushärtens das Gewebe etwas steifer, nach einigen Tagen war dieses jedoch wieder ausreichend flexibel.

Bein Beschichten der Polyethylenfolie (mit Pinsel) wurde eine gleichmäßige, flexible Beschichtung mit guter Haftung erhalten.

Auf die CONOLITE ®-Glasfaserplatten wurde die Zusammensetzung sowohl mit einem Pinsel als auch mit einem Holzspachtel aufgetragen. In beiden Fällen erhielt man gleichmäßige, glatte Oberflächen mit guter Haftung. Die Aushärtungszeit bis zum Vorliegen einer trockenen Oberfläche betrug ca. 30 Minuten.

Nach etwa 2-tägiger Lagerung bei Raumtemperatur (etwa 22°C) und geringer Luftbewegung wurden die so hergestellten beschichteten Proben hinsichtlich Flexibilität und Haftung der Beschichtung geprüft. Die Flexibilität wurde durch einen Biegeversuch (90° um einen Zylinder von ca. 4 cm Durchmesser) geprüft. Die Proben wurden in beiden Richtungen, d.h. Beschichtung auf der Innen- und Außenseite des Zylinders, getestet.

Die Aluminiumfolie zeigte keinerlei Risse, Brüche oder Ablösen der Beschichtung bei diesen Versuchen.

Das imprägnierte Glasfasergewebe zeigte ebenfalls keine Risse, Brüche oder Ablösung vom Substrat.

Die beschichtete Polyethylenfolie zeigte anfänglich eine gute Biegsamkeit ohne Risse oder Brüche. Nach 3 Tagen kam es jedoch durch Knicken oder schnelles Rollen unter Druck zum Brechen der Beschichtung. Die Beschichtung löste sich zu diesem Zeitpunkt nur dann von der Folie, wenn das Reißen der Beschichtung durch Knicken herbeigeführt wurde. War die Beschichtung voll ausgehärtet, löste sie sich leicht von der Folie.

Die nach dem obigen Verfahren erhaltenen Proben wurden dann mit einem Kleber (Monsanto 2497) auf eine CONOLITE ®-Glasfaserplatte geklebt und mit einem Handbrenner beflammt. Je nach Schichtdicke der aufgetragenen Beschichtungen und Substrat ergaben sich intumeszierte Schichten von 8 bis 16 mm Dicke.

Wenn die erfindungsgemäße Zusammensetzung in zwei Schichten auf eine CONOLITE ®-Glasfaserplatte aufgetragen wurde, so hielt diese einer 925°C heißen Brennerflamme bei einer Beflammung von unten mindestens 5 Minuten stand, wie dies der Test FAA 25.855, Appendix F, vorschreibt.

Die so beschichtete Platte bestand den Test auch hinsichtlich der Undurchlässigkeit für Rauchgas und Flammen. Die im Test vorgeschriebene Temperatur auf der Rückseite, gemessen mit einem Thermoelement in 10 cm Entfernung von der Platte, lag ebenfalls unter der vorgeschriebenen Grenze von 204°C.

## Patentansprüche

1. Intumeszierende Zusammensetzung vom Zwei-Komponenten-Typ, dadurch gekennzeichnet, daß sie zumindest umfaßt:
(A) ein Amino-Formaldehydharz; und
(B) einen Phosphorsäureester in Mischung mit mindestens einem Additiv, das ausgewählt ist aus zur Wasseraufnahme befähigten Substanzen, Füllstoffen, Pigmenten, Tensiden und Mischungen davon.

2. Zusammensetzung nach Anspruch 1, dadurch gekennzeichnet, daß das Amino-Formaldehydharz ein gegebenenfalls modifiziertesMelamin-Formaldehydharz, ein gegebenenfalls modifiziertes Harnstoff-Formaldehydharz oder eine Mischung davon ist.

3. Zusammensetzung nach Anspruch 1, dadurch gekennzeichnet, daß das Amino-Formaldehydharz ein bei Raumtemperatur flüssiges Harz ist.

4. Zusammensetzung nach Anspruch 3, dadurch gekennzeichnet, daß das Amino-Formaldehydharz ein methyloliertes Melaminharz, insbesondere Dimethylolmelamin, Trimethylolmelamin oder Hexamethylolmelamin oder eine Mischung davon, ist.

5. Zusammensetzung nach irgendeinem der Ansprüche 1 bis 4, dadurch gekennzeichnet, daß der Phosphorsäureester ein Phosphorsäureteilester von einem oder mehreren Polyolen ist.

6. Zusammensetzung nach irgendeinem der Ansprüche 1 bis 5, dadurch gekennzeichnet, daß der Phosphorsäureester eine Mischung von gegebenenfalls mit Carbonsäureanhydrid modifizierten Mono- und Diestern von Orthophosphorsäure mit einem oder mehreren Polyolen ist, wobei der durchschnittliche Hydroxylgruppengehalt dieser Polyole mindestens 40 Gew.-% beträgt, das Molverhältnis Monoester/Diester 12:1 nicht übersteigt und der Phosphorgehalt der Mischung wenigstens 10 Gew.-% beträgt.

7. Zusammensetzung nach Anspruch 6, dadurch gekennzeichnet, daß die Mischung von Mono- und Diestern von Orthophosphorsäure von mindestens zwei Polyolen abgeleitet ist.

8. Zusammensetzung nach irgendeinem der Ansprüche 5 bis 7, dadurch gekennzeichnet, daß die Polyole aus aliphatischen und cycloaliphatischen Polyolen mit 2 bis 12 Kohlenstoffatomen ausgewählt sind.

9. Zusammensetzung nach Anspruch 8, dadurch gekennzeichnet, daß die Polyole 2 bis 6 Kohlenstoffatome aufweisen.

10. Zusammensetzung nach Anspruch 8, dadurch gekennzeichnet, daß die Polyole aus Glycerin, Trimethylolpropan, Pentaerythrit, Inosit, Ethandiol, Propandiol und Mischungen davon ausgewählt sind.

11. Zusammensetzung nach irgendeinem der vorangehenden Ansprüche, dadurch gekennzeichnet, daß die Komponente (B) neben dem Phosphorsäureester mindestens eine zur Wasseraufnahme befähigte Substanz, bevorzugt pyrogene Kieselsäure, als Additiv enthält.

12. Zusammensetzung nach irgendeinem der vorangehenden Ansprüche, dadurch gekennzeichnet, daß die Komponente (B) in Form einer wäßrigen Formulierung vorliegt.

13. Zusammensetzung nach irgendeinem der vorangehenden Ansprüche, dadurch gekennzeichnet, daß das Gewichtsverhältnis von Amino-Formaldehydharz zu Phosphorsäureester 30:70 bis 70:30, insbesondere 40:60 bis 50:50 beträgt.

14. Zusammensetzung nach irgendeinem der vorangehenden Ansprüche, dadurch gekennzeichnet, daß die Komponenten (A) und (B) getrennt verpackt vorliegen.

15. Verwendung der Zusammensetzung nach irgendeinem der Ansprüche 1 bis 14 als Brandschutzmittel, insbesondere zur Beschichtung bzw. Imprägnierung von zu schützenden Materialien.

16. Verwendung nach Anspruch 15, dadurch gekennzeichnet, daß die Zusammensetzung zur Beschichtung bzw. Imprägnierung von Baumaterialien, insbesondere Glasfasermatten, eingesetzt wird.
